Europäisches Patentamt

European Patent Office

Office européen des brevets

(11) Publication number: **0 029 371**
**A2**

(12) **EUROPEAN PATENT APPLICATION**

(21) Application number: **80304138.3**

(22) Date of filing: **19.11.80**

(51) Int. Cl.³: **H 01 M 14/00, C 25 B 3/00**

(30) Priority: **20.11.79 IL 58747**

(43) Date of publication of application: **27.05.81**
**Bulletin 81/21**

(84) Designated Contracting States: **AT BE CH DE FR GB IT LI LU NL SE**

(71) Applicant: **YEDA RESEARCH AND DEVELOPMENT COMPANY, LTD., Weizmann Institute of Science Herzl Street at Yavne Road, Rehovot (IL)**

(72) Inventor: **Manassen, Joost, Yad Weizmann Gate, Rehovot (IL)**
Inventor: **Hodes, Gary, Bar Shaul 6, Rehovot (IL)**
Inventor: **Cahen, David, Kipnis 3, Rehovot (IL)**

(74) Representative: **Lawrence, Peter Robin Broughton et al, Gill, Jennings & Every 53-64 Chancery Lane, London WC2A 1HN (GB)**

(54) Assemblies comprising semiconductor electrodes.

(57) An assembly comprising at least two semiconductor electrodes (19, 20) each of the semiconductor electrodes having a positive and negative surface, and an electrolyte (27) for electrically connecting the surfaces of opposite polarity of said semiconductor electrodes, the electrolyte comprising at least one redox couple capable of reversible redox reaction with one of the surface of opposite polarity of the electrodes whereby the composition of said electrolyte remains substantially unchanged as charge is passed between said electrodes..

0029371

1 YEDA RESEARCH AND DEVELOP-
MENT COMPANY LTD GJE6080/225

Assemblies Comprising Semiconductor Electrodes

This invention relates to assemblies that comprise semiconductor electrodes and which have been modified so as to reduce the amount of external wiring and ohmic contacts that are needed when operating such assemblies.

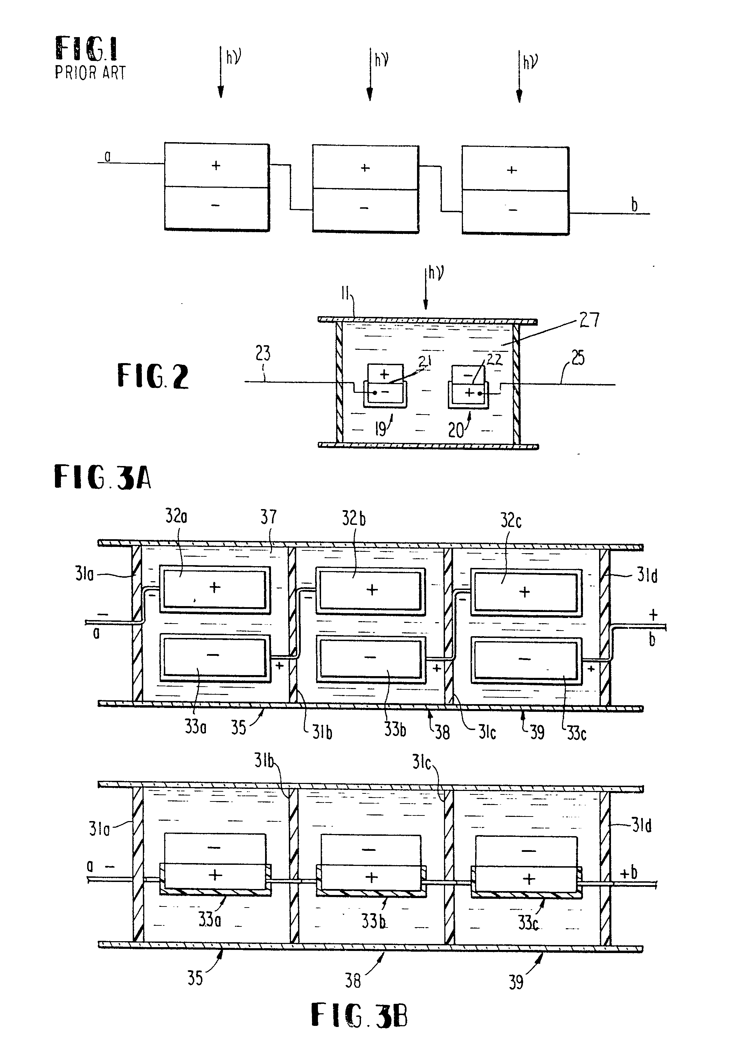

The invention is illustrated by reference to the accompanying drawings in which Figure 1 demonstrates a conventional system for electrically connecting photovoltaic cells in series while Figures 2 to 5 illustrate assemblies according to the invention, as is described in more detail below.

As shown in Figure 1 semiconductor devices have conventionally been connected in series by hard-wiring the positive and negative surfaces to one another to form a circuit having pole means a and b. When such devices are incorporated in photoelectric cells radiation striking, for instance, the positive surfaces of the devices generates a current which is transmitted from device to device by the hard-wiring. For effective operation it is generally necessary for the illuminated surfaces to conduct electrical current well but many surfaces are not sufficiently conductive and it is therefore often necessary to introduce grids of electrically conductive material within or on the surface of the semiconductors so as to improve the conductivity.

In our European Application 80301280.6 filed 21st April 1980 and in United States Patent Application SN 141,795 filed 21st April 1980 and entitled "Electro-

BAD ORIGINAL

2

chemical Cell Battery And Method Of Assembling Same" there is described a new technique for connecting photoelectric cells in series using bipolar electrode connections. Such a system is usable for interconnecting cells of the type disclosed in United States Patent 4,064,326. According to the application, the cells are separated by electrically conductive separators which connect the photoelectrode and counterelectrode of two adjacent cells. The cells are, therefore, connected in series without the use of external contacts. Although the system avoids the use of external contacts, the electrolyte used in the system is not used to electrically connect discrete cells but acts as an electrolyte in conjunction with the photoelectrode and counterelectrodes of each cell.

Most photovoltaic devices, be they p/n or metal/semiconductor cells, are current generators rather than voltage generators and so for practical applications it is necessary to connect a plurality of cells in series to achieve an acceptable working voltage. In practice, this is accomplished by wiring and soldering which may sometimes pose a problem when appreciable quantities of current must pass through the wire under the relatively low voltage conditions which are present. Sometimes, as was noted above, it is even impossible to make good electrical contact by means of conventional electrical connections with the photoactive surface.

United States patents 4,021,323 and 4,136,436 disclose a solar energy conversion system. Upon illumination the devices generate a voltage of about 1v. thereby resulting in electrolysis of a liquid. For higher voltages complicated connections are necessary.

It has been our object to devise a way of connecting semiconductor electrodes in assemblies such as photoelectrical cells so as to minimise the amount of hard-wiring that is needed, and in particular so as to minimise and generally eliminate the amount of hard-wiring that is needed onto the surfaces that are to be exposed to illumination.

An assembly according to the invention comprises at least two electrodes and an electrolyte and is characterised in that the electrodes are semi-conductor electrodes each having positive and negative surfaces, the electrolyte comprises at least one redox couple capable of reversible redox reaction with one surface of each of the semiconductor electrodes whereby the composition of the electrolyte remains substantially unchanged as charge is passed between the electrodes, and a surface of one polarity of one electrode is electrically connected to a surface of opposite polarity of another electrode as a result of contact of the said two surfaces with the electrolyte.

Generally the electrodes are immersed in the electrolyte and the surfaces of the electrode that are not electrically connected by the electrolyte may then be isolated from the electrolyte by a protective layer.

Rigid electrical connectors may be used in the assemblies of the invention but they are used solely for electrical connections to the surfaces of the electrodes that are not electrically connected to the electrolyte. The invention is of particular value when the assembly comprises a photoelectrical cell and the electrodes are photoelectrodes located for exposure to illumination since it can then be arranged that the surfaces that are exposed to illumination are the surfaces that are interconnected by contact with the electrolyte and any rigid electrical connections that are needed can be made to the other surfaces, which generally are isolated from the electrolyte.

The semiconductor electrodes may be electrically connected in series such that the negative surface of one of the electrodes and the positive surface of an other are exposed to the electrolyte, thereby electrically connecting the positive and negative surfaces.

The invention may be used to permit connection of surfaces of opposite polarity of two or more semiconductors by means of an electrolyte whose composition remains substantially unchanged. The assembly generally comprises at least one compartment containing a pair of the semiconductor electrodes and the electrolyte and this compartment may be provided with pole means for effecting rigid electrical connection to each of the surfaces of the electrodes that are not connected by the electrolyte. Thus the assembly may comprise a plurality of such compartments with adjacent compartments being connected to one another in series.

Thus the invention has the advantage that it permits good electrical connections to be made (by means of the electrolyte) between surfaces which are insufficiently conductive to be electrically connected by conventional means and so previously had to be provided with a grid. The need for a grid is now eliminated.

The invention also has the advantage that it is valuable for providing the necessary voltage for electrolysing fluids such as liquids by means of photoactive semiconductor junctions. Thus the invention includes an electrolysis apparatus and method using two photoactive semiconductor electrodes, each having positive and negative surfaces connected in series by exposing them to a redox electrolyte, thus forming an assembly according to the invention, and two additional electrodes connected with one or several series connected assemblies and brought into contact with the liquid to be electrolysed. Illumination of the electrodes results in electrolysis of the fluid with which the additional electrodes are brought into contact. In particular preferred electrolysis apparatus according to the invention comprises a first compartment containing two of the semiconductor electrodes and the redox electrolyte, all as defined above, and a second compartment containing an electrolysable liquid and two additional semiconductor electrodes and in which the positive surface of one of the semi-conductor electrodes in the second compartment is isolated from the liquid in the second compartment and is electrically connected to the negative surface of one of the semiconductor electrodes in the first compartment, and the negative surface of the other of the semiconductor electrodes in the second compartment is isolated from the liquid in the second compartment and is electrically connected to the positive surface of the other of the electrodes in the first compartment.

In assemblies of the invention at least one, and often all, the semiconductor electrodes may comprise a photoactive p/n junction and one of the surfaces of each of the photoactive p/n junction semiconductor electrodes may be positioned for exposure to illumination as well as to the electrolyte. Each of the electrodes may comprise a surface coated with an electrically insulating coating designed to isolate the coated surface from the electrolyte.

At least one and usually all of the semi-conductor electrodes used in the invention may comprise a photoactive metal/semiconductor junction.

At least one and usually all of the semi-conductor electrodes used in the invention may comprise a metal/insulator/semiconductor junction.

At least one and usually all of the semi-conductor electrodes may comprise a semi-conductor surface coated with a thin metal catalyst layer in contact with the electrolyte.

Referring now to Figures 2 to 5 of the accompanying drawings:-

Figure 2 illustrates an assembly comprising a single compartment containing a pair of electrodes electrolytically connected between positive and negative surfaces.

Figure 3A illustrates a top planar view of an assembly wherein pairs of electrolytically connected semiconductor devices are assembled in series by bipolar connections;

Figure 3B illustrates a side elevational view of the assembly of Figure 3A.

Figure 4A is a cross sectional view of an electrolysis device;

Figure 4B is a top planar view along line B-B of Figure 4A; and

Figure 5 is an additional embodiment of the electrolysis assembly.

As may be seen with reference to Figure 2, a compartment 11 is illustrated comprising semiconductor electrodes 19 and 20. The semiconductor electrodes comprise junctions 21 and 22 respectively. The negative portion of semiconductor 19 is connected to lead 23 while the positive portion of semiconductor 20 is connected to a lead 25. The surfaces of the portions of the semiconductors connected to the leads are electrically isolated from the electrolyte 27 within the container such that only the positive portion of semiconductor 19 and the negative portion of semiconductor 20 are in contact with the electrolyte so that electrical current may be conducted therebetween. When the container is irradiated, opposite redox reactions occur at the illuminated portions of both electrodes, and as a result the net solution composition does not change. However, current is conducted and the voltage measured across poles 23 and 25 is equal to the sum of the voltage generated by individual semiconductors, thereby corresponding to the situation in which the individual semiconductors were hard-wired to one another.

The above principle may be combined with the principle disclosed in the European and United States Patent Applications referred to above and to which reference should be made, to result in a preferred assembly of the invention which is schematically illustrated in Figure 3A.

In this assembly a pair of electrodes 32a and

7

33a is positioned in a compartment 35 comprising electrolyte 37. Electrode 32a has the positive portion of its junction exposed to the liquid electrolyte as well as the light source while its negative portion (not shown) is electrically isolated from the liquid electrolyte and is connected to end separator 31a. Electrode 33a in cell 37 has its negative portion exposed to the electrolyte and to the light source while its positive portion is electrically isolated from the electrolyte and connected to intermediate separator 31b. Each of cells 35, 38 and 39 are arranged in series with semiconductor electrodes 33a, 33b and 33c having their positive portions electrically isolated from the liquid and wired to the separator plates 31b, 31c and 31d. Electrodes 32a, 32b and 32c in each of cells 35, 38 and 39 are reversed with respect to electrode semiconductors 33a, 33b and 33c such that their lower negative portions are electrically isolated from the electrolyte and are hard-wired to separators 31 while their upper positive portions have a positive surface exposed to the electrolytic redox couple containing liquid. The isolated portions of the electrodes may be covered with an insulating substance such as tar or a suitable organic or inorganic polymer.

When an assembly of the type illustrated in Figures 3A and 3B is irradiated and a voltage is measured across poles a and b, the voltage measured is the sum of the voltages of each individual junction, while the current is that of only one cell. The net effect, therefore, is that of connecting the cells electrically in series.

Such an assembly finds particular value when it is not possible to make good electrical contact with the semiconductor surface such as, for instance, when the semiconductor is built of very polycrystalline or amorphous particles. In United States Patents 4,021,323 and 4,136,436 for instance, p/n junctions are described which are formed by embedding p/n junctions in the form

**0029371**

of small pheres in a wax or polymer layer. On the dark or non-irradiated side of the semiconductor, the spheres can be connected by a metal layer, however, this is not possible on the irradiated side. Thus, the principle of the instant invention may be applied to such a system such that the electrolyte contacts the exposed surface for purposes of providing electrical contact and increasing the voltage. Such contact would have been impractical using conventional wiring.

The electrolyte solution used should be noncorrosive with respect to the semiconductor surface (or surface covered with a metallic layer), and must have an adequate ionic conductivity. Water is a preferred solvent, when corrosion is no problem.

The electrolyte solution comprises a redox couple whose choice is dictated by its solubility and its electrochemical kinetic at the semiconductor surface. If the semiconductor surface can tolerate a low pH, most metal ions of varying valency may be used. Where neutral or basic electrolyte solutions must be used, the choice is less varied but a wide range of metal complexes or anions of varying valency may be used. Thus aqueous salt solutions are often prefered.

Instead of using water, conducting organic solvents may be used and may be provided by organic solvents having high concentrations of ionic species. Many combinations of redox couples and solvent are known from organic electrochemistry. By virture of the fact that current densities in photovoltaic systems without concentration of the light are rarely more than 20-30 mA/cm$^2$ at maximum power conditions, resistance losses will not be excessive under the proper conditions.

Many redox systems are coloured and will absorb a portion of the incoming radiation. Although in some cases some absorption losses may be tolerated, redox couples which do not colour the solution are preferably used.

The resistance of the electrolyte solutions is not only a function of the mobility and concentration of the ions therein, but also a function of their rate of reaction at the semiconductor surfaces. Since many semiconductor surfaces are rather sluggish as electrodes in electrochemical reactions, it is preferable in many cases to add a small quantity of electrocatalyst at the semiconductor/solution interface. This may best be done by depositing a small quantity of a metal onto the semiconductor, which metal does not corrode in the liquid medium being used. The coating may be applied by a variety of methods such as vacuum evaporation, sputtering, electroplating and the like. Even very small quantities suffice for obtaining the required catalytic effects. Additionally, in many cases it is possible to prevent corrosion of the surface by covering it with a homogeneous layer of metal thin enough to transmit most of the incoming light (this being a necessity when metal semiconductor cells are to be used).

From the above discussion it should be clear that they system chosen must be adapted to each particular case. For aqueous acidic solutions an $Fe^{+2}/Fe^{+3}$ redox system is suitable. Although $Fe^{+3}$ ions do indeed absorb some radiation, their extinction coefficient is low. In alkaline solutions, polysulfide systems such as $S^=/S$ are good systems in spite of the fact that some radiation is absorbed in the solution by virtue of the fact that it is coloured.

In organic systems, solvents such as acetonitrile or dimethylformamide are suitable. Such solvents are made conductive by the dissolution of large quantities of salts therein. As to the redox system a wide choice of metal complexes are soluble in organic media. Suitable salts are those of lithium of quaternary ammonium bases. Where corrosion is less of a problem, molten salt may also be used.

A mixture of water and organic solvents is also possible, the limitation once again being whether the semiconductor surface corrodes or not upon exposure to the liquid phase.

In general suitable redox systems that may be used may be selected from $Fe^{2+}/Fe^{3+}$; $Fe(CN)_6^{4-}/Fe(CN)_6^{3-}$; $X^-/X$ (where X is Cl, Br, I); $H/H^+$; $OH^-/H_2O$; $Cr^{2+}/Cr^{3+}$; $S_x^{2-}/S_x$; $Sn^{2+}/Sn^{4+}$; $HSnO_2^-/Sn(OH)_6^{2-}$ and $V^{3+}/V^{4+}$.

The assembly of the invention illustrated in Figures 3A and 3B is preferred when one desires only to generate electrical power. However, in many instances it is preferred to use the current generated to cause a chemical reaction such as the electrolysis of water or some other chemical substance.

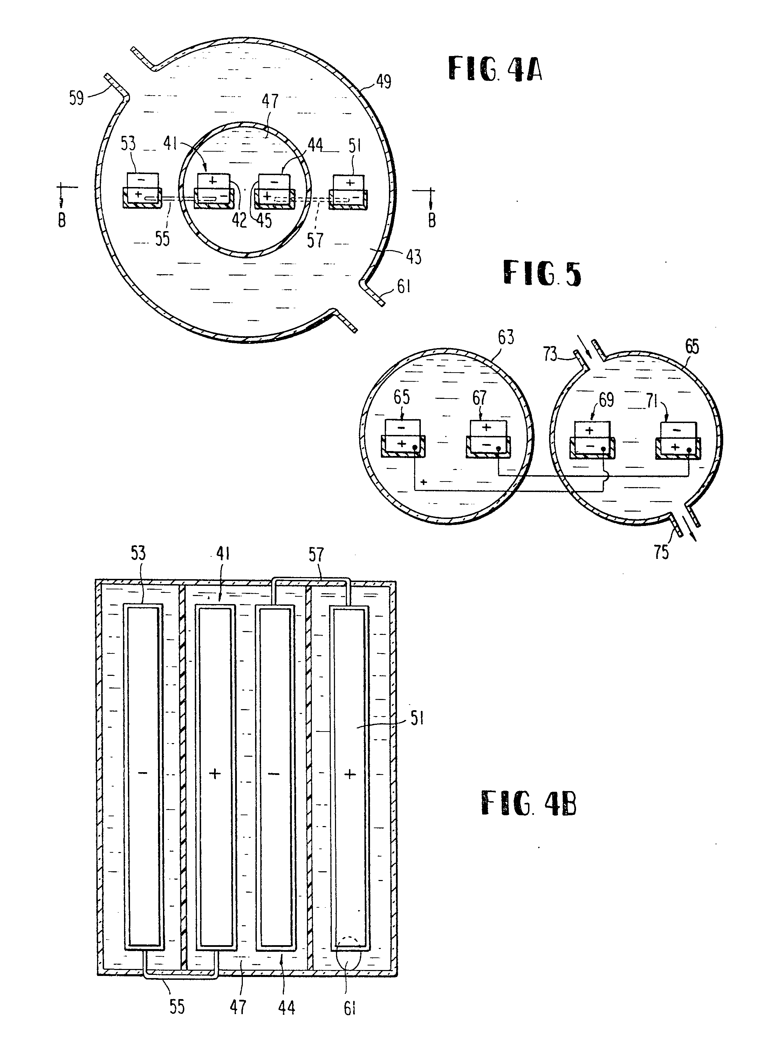

While the assembly of Figures 3A and 3B may be connected via leads a and b and contacts to a suitable electrochemical cell for purposes of carrying out such reactions, it is more economical and in some cases preferable to perform the chemical reaction within the photocell itself. Figures 4A and 4B illustrate an embodiment of the invention which makes this possible.

As seen in Figure 4A, two concentric tubes are used. Inner transparent tube 43 contains two electrode junctions 41 and 44 one of which has a positive side 42 exposed while the other has negative side 45 exposed, the remaining unexposed positive and negative surfaces being electrically isolated as was discussed above. Inner compartment 43 is filled with a suitable redox containing electrolyte solution 47 and sealed. Two additional electrodes are positioned in an outer annular compartment 49, once again one of which, 51, has its positive side and the other, 53, its negative side exposed. The positive portion of electrode 53 is electrically connected by means of wire 55 to the negative portion of electrode 42 within inner tube 43. In a like fashion the positive and isolated portion of electrode 45 is electrically connected by means of contact connection 57 to the negative isolated portion of electrode 51.    Openings 59 and 61 are provided in the outer annular compartment which is transparent to irradiation.    When irradiated, a voltage is created in the outer or electrolysis compartment which, in the embodiment illustrated, is equal to four times the voltage of a single junction. A suitable liquid which is to be electrolysed is circulated through openings 59 and 61 acting as inlets and outlets while electrochemical reactions take place on the exposed semiconductor surfaces 53 and 51 in the electrolysis compartment.    When using silicon p/n junctions, an embodiment of the type illustrated in Figures 4A and 4B is suitable for electrolysing water without the necessity of building a separate electrolysis plant.    As may be seen from Figure 4B, the various electrodes within the various transparent containers are preferably arranged such that they receive maximum exposure and radiation.

Although two concentric tubes have been shown in Figures 4A and 4B, it is likewise possible to use two adjacent tubes as shown in Figure 5 to achieve a similar result.    As may be seen in Figure 5, two separate compartments 63 and 65 each containing junction electrodes 65, 67 and 69, 71 are disclosed.  Upon irradiation, the liquid to be electrolysed is circulated through openings 73 and 75, while compartment 63 remains sealed.

Quite obviously, a wide variety of alternative configurations is also possible based on the above principles.

Electrodes may be either based on solid-state solar cells (e.g. p/n Si, $Cu_2S/CdS$), with a protective electrically conducting layer (thin metal or conducting oxide) on the surfaces exposed to the electrolyte, if necessary, or photoelectrodes of one semiconductor type, as described for photoelectrochemical cells, such as cadium chalcogenides, GaAs, InP, Si, etc.

EXAMPLE

Two monocrystalline silicon p/n junction electrodes constructed in a conventional fashion, one of which is mainly n-type with a thin p-type layer on top, the other being mainly p-type, with a thin n-type layer on top, are positioned in a cell. The transparent sides of each of the electrodes is covered with a 100 Angstrom thick platinum layer applied by means of vacuum evaporation. The unexposed portions of the junction electrodes are connected via ohmic contacts by conventional means with electrically conducting connections and are covered with an insulating layer of tar. Both electrodes have a surface area of one square centimeter and are enclosed in a glass tube containing one molar $FeSO_4/Fe_2(SO_4)_3$ aqueous solutions of pH3. In this case, at the metallised n-type electrode, the reaction occurring is $Fe^{3+}(Fe_2(SO_4)_3) \rightarrow Fe^{2+}(FeSO_4)$, while the reverse reaction takes place at the metallised p-type surface.

Upon exposure to sunlight having an intensity of $85mW/cm^2$ a voltage of 1.02 volts is measured between the electrical connections while the cells generate a current of 16 $mA/cm^2$. The measured voltage corresponds to that of the two silicon p/n junctions connected in series.

0029371

13

<u>CLAIMS</u>

1. An assembly comprising at least two electrodes and an electrolyte characterised in that the electrodes are semiconductor electrodes each having positive and negative surfaces, the electrolyte comprises at least one redox couple capable of reversable redox reaction with one surface of each of the semiconductor electrodes whereby the composition of the electrolyte remains substantially unchanged as charge is passed between the electrodes, and a surface of one polarity of one electrode is electrically connected to a surface of opposite polarity of another electrode as a result of contact of the said two surfaces with the electrolyte.

2. An assembly according to claim 1 characterised in that the electrodes are immersed in the electrolyte and the surfaces of the electrodes that are not electrically connected by the electrolyte are isolated from the electrolyte by a protective layer.

3. An assembly according to claim 1 or claim 2 characterised in that electrical connectors are electrically connected to the surface of the electrodes that are not electrically connected by the electrolyte.

4. An assembly according to any preceding claim characterised in that it comprises a photoelectric cell and the electrodes are photoelectrodes located for exposure to illumination of the surfaces that are interconnected by the electrolyte.

5. An assembly according to claim 4 in which at least one of the semiconductor electrodes comprises a

14

photoactive p/n junction.

6.          An assembly according to claim 4 characterised in that at least one of the semiconductor electrodes comprises a photoactive metal/semiconductor junction.

7.          An assembly according to any preceding claim characterised in that at least one of the surfaces that are electrically connected by the electrolyte is coated with a thin metal catalyst layer.

8.          An assembly according to any preceding claim characterised in that the electrolyte is selected from molten salts and solutions of salts in a solvent selected from water, organic solvents and aqueous organic solvents, and the electrolyte is substantially colourless.

9.          An assembly according to any preceding claim characterised in that it comprises at least one compartment containing two of the semiconductor electrodes and the electrolyte and provided with pole means for effecting electrical connection to each of the surfaces of the electrodes that are not connected by the electrolyte.

10.          An assembly according to claim 9 comprising a plurality of the said compartments connected in series by the pole means with the negative pole of one compartment connected to the positive pole of an adjacent compartment.

11.          An assembly according to any of claims 1 to 9 characterised in that it comprises a first compartment containing two of the said semiconductor electrodes and also containing the said electrolyte, and further characterised in that it comprises a second compartment comprising an electrolysable liquid and two additional semiconductor electrodes, the positive surface of one of the electrodes in the second compartment being isolated from the liquid in the second compartment and being electrically connected to the negative surface of one of the electrodes in the first compartment, and the negative surface of the other of the electrodes in the second compartment being isolated from the liquid in the

15

second compartment and being electrically connected to the positive surface of the other of the electrodes in the first compartment.

12. An assembly according to claim 11 in which the second compartment includes an inlet for feeding electrolysable liquid into the second compartment and an outlet for removing it from the second compartment.

13. An assembly according to claim 11 or claim 12 in which the first compartment is surrounded by the second compartment.

**FIG.1**
PRIOR ART

**FIG.2**

**FIG.3A**

**FIG.3B**

0029371

FIG. 4A

FIG. 5

FIG. 4B